# FASCICULE DE BREVET EUROPEEN

(11) **EP 3 204 620 B1**
(45) Date de publication et mention de la délivrance du brevet: **21.11.2018**
(21) Numéro de dépôt: 15785162.7
(22) Date de dépôt: 29.09.2015
(51) Int. Cl.: F01D 25/16, F01D 17/16, F01D 9/04, F01D 5/14, F02C 9/18

(54) **STATOR DE TURBOMACHINE D'AÉRONEF**
STATOR EINES FLUGZEUGTURBINENTRIEBWERKS
STATOR OF AN AIRCRAFT TURBINE ENGINE

(30) Priorité: 10.10.2014 FR 1459721
(43) Date de publication de la demande: 16.08.2017
(73) Titulaire: Safran Aircraft Engines, 75015 Paris (FR)
(72) Inventeur: CHARBONNIER, Simon, Pierre, Claude, 77550 Moissy-Cramayel (FR); PERRIER, Matthieu, Yoann, 77550 Moissy-Cramayel (FR)
(74) Mandataire: Gevers & Orès
(86) Numéro de dépôt international: PCT/FR2015/052583
(87) Numéro de publication internationale: WO 2016/055715

(56) Documents cités:
- EP-A2- 0 942 150
- EP-A2- 1 298 286
- WO-A1-2005/119028
- DE-A1-102007 035 726
- GB-A- 2 226 600
- US-A- 5 207 054
- US-A- 5 672 047

## Description

### DOMAINE TECHNIQUE

La présente invention concerne un stator de turbomachine d'aéronef, et en particulier un stator comportant au moins une rangée annulaire d'aubes fixes et une rangée annulaire de bras.

### ETAT DE L'ART

L'état de l'art comprend notamment les documents WO-A1-2005/119028 et EP-A2-0 942 150.

En général, une turbomachine d'aéronef comprend d'amont en aval, dans le sens d'écoulement des gaz, une soufflante, au moins un compresseur, une chambre annulaire de combustion, au moins une turbine, et une tuyère d'éjection des gaz de combustion.

Dans le cas d'un turboréacteur à double flux, le flux d'air qui traverse la soufflante se divise en un flux primaire qui alimente le moteur et en un flux secondaire qui s'écoule autour du moteur.

De façon classique, le moteur comprend au moins un stator et au moins un rotor. Dans le cas d'un turboréacteur multi-corps, le moteur peut par exemple comprendre deux rotors ou corps, l'un basse pression et l'autre haute pression. Le turboréacteur peut ainsi comprendre un corps basse pression comportant un premier arbre reliant un compresseur basse pression à une turbine basse pression, et un corps haute pression comportant un second arbre reliant un compresseur haute pression à une turbine haute pression.

L'air pénétrant dans le moteur est comprimé successivement dans le compresseur basse pression et le compresseur haute pression avant d'être mélangé à du carburant qui est brûlé dans la chambre de combustion. Les gaz de combustion se détendent ensuite dans la turbine haute pression puis la turbine basse pression pour entraîner en rotation l'arbre basse pression qui entraîne à son tour l'arbre de soufflante.

Le stator de la turbomachine comprend des carters annulaires structuraux, c'est-à-dire des carters suffisamment rigides pour transmettre des efforts. Une turbomachine comprend notamment un carter d'entrée qui s'étend en aval de la soufflante et un carter intermédiaire qui s'étend entre les compresseurs basse et haute pression.

Chacun de ces carters de stator comprend en général des bras en général structuraux qui s'étendent sensiblement radialement entre deux parois annulaires respectivement interne et externe, ces bras étant tubulaires pour le passage de servitudes depuis l'intérieur de la paroi interne jusqu'à l'extérieur de la paroi externe.

Afin de réduire la consommation des moteurs, certaines turbomachines comprennent des réducteurs. Les stators de ces turbomachines comprennent en général une rangée annulaire d'aubes fixes en amont des bras structuraux du carter et une rangée annulaire d'aubes à calage variable en aval des bras structuraux. Le carter intermédiaire de ce type de turbomachine, qui est situé en aval du compresseur basse pression, comprend ainsi une rangée annulaire de bras structuraux aussi appelés bras primaires intercalée entre une rangée annulaire d'aubes fixes (appelées aubes IGV, acronyme de l'anglais *Inlet Guide Vane*) et une rangée annulaire d'aubes à calage variable (appelées aubes VSV, acronyme de *Variable Stator Vane*). Le carter d'entrée, qui est situé en amont du compresseur basse pression, comprend également une rangée annulaire de bras structuraux intercalée entre une rangée annulaire d'aubes fixes et une rangée annulaire d'aubes à calage variable.

Ce type de stator à trois rangées successives d'aubes et de bras (deux rangées d'aubes et une rangée de bras) est très pénalisant car il a un impact négatif sur la masse et les pertes de charge du fait d'un encombrement axial important.

La présente invention apporte une solution simple, efficace et économique à ce problème.

### EXPOSE DE L'INVENTION

L'invention propose un stator de turbomachine d'aéronef selon la revendication 1. Selon l'invention, ce stator de turbomachine d'aéronef comporte une rangée annulaire d'aubes fixes et une rangée annulaire de bras, par exemple structuraux, ledit stator présentant un axe de révolution, et les bords de fuite des aubes fixes sont situés sensiblement dans un premier plan transversal audit axe de révolution et situé en aval d'un deuxième plan transversal audit axe de révolution et passant sensiblement par les bords d'attaque des bras, et les bords d'attaque des aubes fixes sont situés dans un troisième plan transversal audit axe de révolution et situé en amont du deuxième plan transversal, ledit stator comporte en outre une rangée annulaire d'aubes à calage variable, située directement en aval de la rangée annulaire de bras, la rangée annulaire d'aubes à calage variable comprenant des premières aubes à calage variable qui sont situées sensiblement dans le prolongement des bras, et des secondes aubes à calage variable qui sont situées entre les premières aubes à calage variable, les premières aubes à calage variable ayant des profils aérodynamiques différents de ceux des secondes aubes à calage variable.

L'invention permet de réduire l'encombrement axial d'un stator comportant une rangée annulaire d'aubes fixes et une rangée annulaire de bras, en imbriquant axialement au moins partiellement ces rangées. Ainsi, par opposition à la technique antérieure dans laquelle les aubes fixes étaient situées en amont des bras, les aubes fixes sont ici positionnées au moins en partie entre les bras. L'encombrement axial du stator peut ainsi être nettement diminué par rapport à ceux de la technique antérieure, ce qui a un impact positif sur la masse et les pertes de charge à la traversée du stator.

Bien que les rangées d'aubes fixes et de bras soient disposées d'une façon particulière selon l'invention, les paramètres et les propriétés aérodynamiques des profils des aubes et des bras sont avantageusement conservés. Les bras conservent ainsi de préférence leurs épaisseurs, leurs formes et leurs fonctions secondaires de passage de servitudes. Les aubes fixes peuvent conserver leur fonction de redresseur du flux d'air (sortant par exemple de la soufflante de la turbomachine). Ceci permet de conserver les triangles des vitesses en amont et en aval du stator.

L'invention permet d'améliorer les performances aérodynamiques du stator dans les différentes phases de vol. En effet, le fait de décaler vers l'amont les bords d'attaque des aubes fixes par rapport à ceux des bras permet de favoriser le passage de l'écoulement dans les aubes fixes. Cela permet en outre d'adoucir la déviation de l'écoulement en sortie de la soufflante en évitant la déviation directe par les bras. Ainsi, il y a moins de perte de charge et le rendement de la turbomachine s'en trouve amélioré.

Dans la présente demande, on entend par plan transversal, un plan sensiblement perpendiculaire à l'axe longitudinal ou de révolution du stator, qui est en général l'axe longitudinal de la turbomachine.

Avantageusement, les plans longitudinaux médians des bras sont inclinés par rapport à l'axe longitudinal du stator. Les plans longitudinaux médians d'au moins certains des bras et d'au moins certaines des aubes fixes sont de préférence sensiblement parallèles ou légèrement inclinés. Ceci facilite l'imbrication de la rangée d'aubes dans la rangée de bras.

L'inclinaison ou calage des bras permet de diminuer davantage l'encombrement axial du stator sans diminuer la corde réelle des bras, et donc sans modifier leur épaisseur (on peut ainsi conserver le rapport épaisseur/corde ainsi que le nombre et la répartition des bras par rapport à la technique antérieure).

Le stator comporte en outre une rangée annulaire d'aubes à calage variable, située directement en aval de la rangée annulaire de bras. Comme dans le cas précité, le stator selon l'invention comprend ainsi deux rangées d'aubes et une rangée de bras.

La rangée annulaire d'aubes à calage variable comprend des premières aubes à calage variable qui sont situées sensiblement dans le prolongement des bras, et des secondes aubes à calage variable qui sont situées entre les premières aubes à calage variable. Les premières aubes à calage variable ont des profils aérodynamiques différents de ceux des secondes aubes à calage variable. Avantageusement, les premières aubes à calage variable ont des profils aérodynamiques ou courbures plus accentués que ceux des secondes aubes à calage variable.

Le fait d'intercaler les aubes fixes entre les bras a un impact sur les performances aérodynamiques du stator car le triangle des vitesses n'est pas constant azimutalement en aval des bras. Pour remédier à cet inconvénient, les aubes à calage variable situées en aval des bras ont des profils qui ne sont pas tous identiques. Deux profils différents sont utilisés suivant que l'aube se trouve directement en aval d'un bras ou en aval d'une aube fixe.

Les bords d'attaque des premières aubes à calage variable sont de préférence situés au plus près des bords de fuite des bras de façon à réduire encore l'encombrement axial de stator mais aussi pour que ces premières aubes jouent le rôle de « volets » permettant d'assurer l'opérabilité des compresseurs basse et haute pression dans toutes les conditions de vol.

Le stator peut comprendre deux parois annulaires respectivement interne et externe, entre lesquelles s'étendent les rangées d'aubes fixes et de bras.

Chaque aube à calage variable peut comprendre à son extrémité radiale externe un pivot cylindrique qui est monté dans une cheminée de la paroi externe.

La paroi externe peut comprendre, en amont des bras, une rangée annulaire de fentes traversantes de passage d'air de décharge et des moyens d'obturation, de préférence réglable, de ces fentes. Les fentes et les moyens d'obturation forment une vanne de décharge aussi appelée vanne VBV, acronyme de *Variable Bleed Valve.*

En variante, la paroi externe comprend, entre des bras, au moins une ouverture traversante de passage d'air de décharge et au moins une porte d'obturation, de préférence réglable, de cette ouverture.

Dans un cas particulier de réalisation de l'invention, une estimation de la réduction de masse apportée par l'invention serait de 5 à 10% de la masse du module par carter de ce type. Celle-ci s'explique principalement par la réduction de longueur axiale (et donc la réduction des parois internes et externes de carters dans les flux primaire et secondaire), liée à l'intégration des aubes fixes entre les bras, la réduction des jeux axiaux (notamment celui entre les rangées de bras et d'aubes à calage variable), et le calage des bras (qui peut être compris entre 20 et 30° - ce qui permet de gagner 10% environ de corde - contre 0° dans la technique antérieure).

Un gain supplémentaire annexe et non chiffrable est la réduction de masse des canalisations et harnais qui cheminent autour du carter de soufflante, par réduction des distances parcourues.

La présente invention concerne également une turbomachine d'aéronef, telle qu'un turboréacteur ou un turbopropulseur, caractérisée en ce qu'elle comprend au moins stator tel que décrit ci-dessus. Dans le cas où la turbomachine comprend une soufflante et des compresseurs basse et haute pression, le stator peut être monté entre la soufflante et le compresseur basse pression et/ou entre les compresseurs basse et haute pression. Alternativement, lorsque le turbopropulseur comprend par exemple deux hélices externes contrarotatives, situées au voisinage de l'extrémité aval du turbopropulseur par référence à l'écoulement des gaz dans son moteur, le stator peut être monté en entrée du compresseur basse pression.

### DESCRIPTION DES FIGURES

L'invention sera mieux comprise et d'autres détails, caractéristiques et avantages de l'invention apparaîtront à la lecture de la description suivante faite à titre d'exemple non limitatif et en référence aux dessins annexés dans lesquels :
- la figure 1 est une demi vue schématique partielle en coupe axiale d'une turbomachine d'aéronef selon la technique antérieure, vue de côté
- la figure 2 est une vue très schématique d'une partie de la turbomachine de la figure 1, vue de dessus,
- la figure 3 est une demi vue schématique partielle en coupe axiale d'une turbomachine d'aéronef selon l'invention, vue de côté
- la figure 4 est une vue très schématique d'une partie de la turbomachine de la figure 3, vue de dessus,
- la figure 5 est une vue correspondant à la figure 3 et représentant un mode de réalisation d'un carter d'entrée selon l'invention, et
- les figures 6 et 7 sont des vues correspondant à la figure 3 et représentant des variantes de réalisation d'un carter intermédiaire selon l'invention.

### DESCRIPTION DETAILLEE

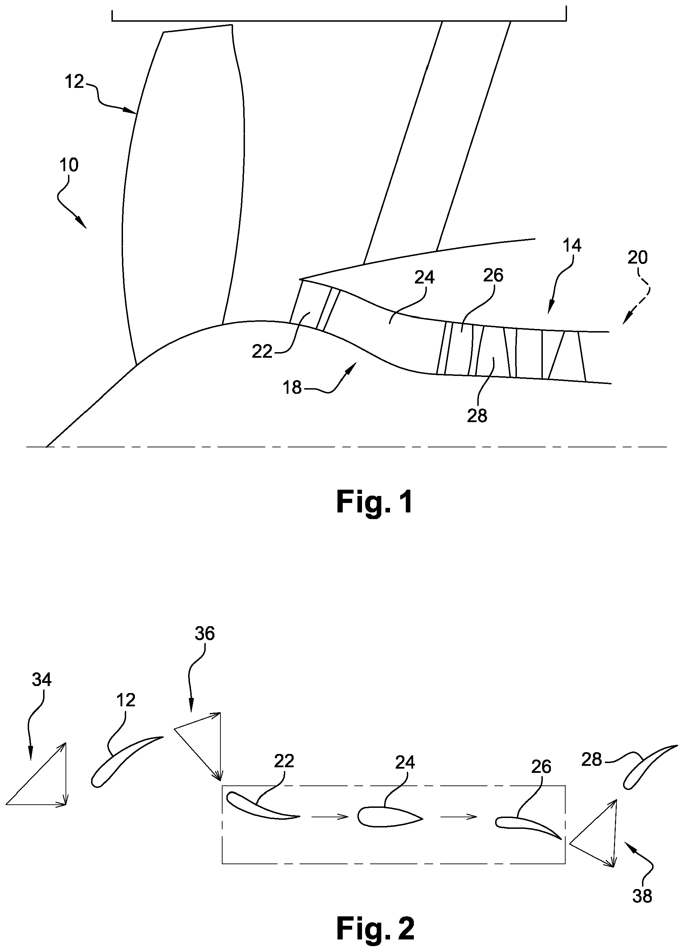

On se réfère d'abord à la figure 1 qui représente une turbomachine 10 selon la technique antérieure, cette turbomachine 10 étant ici un turboréacteur à double flux. L'invention est décrite par rapport à cet exemple mais on comprend bien que l'invention peut s'appliquer à d'autres architectures de turbomachine.

La turbomachine 10 comprend d'amont en aval, dans le sens d'écoulement des gaz, une soufflante 12 qui génère un flux qui se divise en deux flux coaxiaux, le flux primaire alimentant le moteur qui comprend un compresseur basse pression 14, un compresseur haute pression (non représenté), une chambre de combustion (non représentée), des turbines haute et basse pression (non représentées) et une tuyère (non représentée) d'éjection des gaz de combustion.

Ces modules du moteur (soufflante, compresseurs, chambre de combustion, turbines) sont entourés par des carters annulaires structuraux de stator. La turbomachine 10 comprend ainsi plusieurs carters annulaires successifs parmi lesquels un carter d'entrée 18 en amont du compresseur basse pression 14, et un carter intermédiaire 20 entre les compresseurs basse et haute pression.

Le carter d'entrée 18 comprend une rangée annulaire de bras structuraux 24 (ou bras primaires) qui est intercalée entre une rangée annulaire d'aubes fixes 22 (ou aubes IGV) et une rangée annulaire d'aubes à calage variable 26 (ou aubes VSV).

Comme cela est également visible en figure 2, la rangée d'aubes fixes 22 est située entre la soufflante 12 et la rangée de bras 24, et la rangée d'aubes à calage variable 26 est située entre la rangée de bras 24 et une roue mobile de rotor 28 du compresseur basse pression 14.

De la même façon, le carter intermédiaire 20 comprend une rangée annulaire de bras structuraux (ou bras primaires) qui est intercalée entre une rangée annulaire d'aubes fixes (ou aubes IGV) et une rangée annulaire d'aubes à calage variable (ou aubes VSV). La rangée d'aubes fixes est située entre une roue de rotor du compresseur basse pression et la rangée de bras, et la rangée d'aubes à calage variable est située entre la rangée de bras et une roue de rotor du compresseur haute pression.

La référence 34 en figure 2 représente les triangles de vitesses du flux d'air entrant dans la soufflante 12, et les références 36, 38 représentent les triangles de vitesses du flux d'air primaire en amont des aubes fixes 22 et en aval des aubes à calage variable 26.

Comme expliqué dans ce qui précède, chacun des carters d'entrée 18 et intermédiaire 20 forme, axialement avec les rangées d'aubes 22, 26, un stator encombrant.

L'invention permet de remédier à ce problème grâce à l'imbrication axiale de la rangée d'aubes fixes dans la rangée de bras du stator.

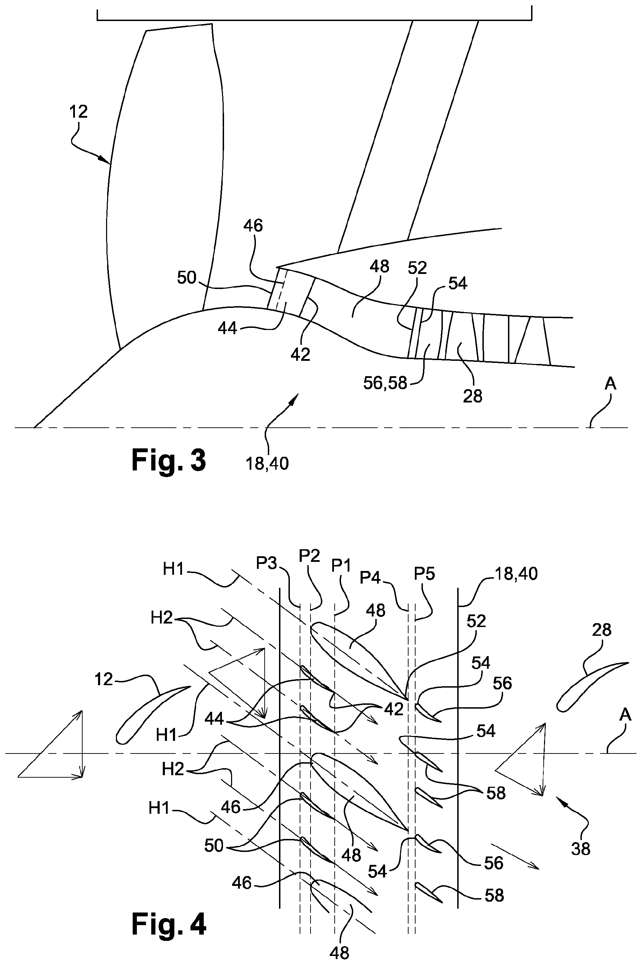

Les figures 3 et 4 représentent un exemple de réalisation d'un stator ou carter d'entrée selon l'invention, cet exemple de réalisation pouvant naturellement s'appliquer à un carter intermédiaire.

On note P1 un plan transversal (perpendiculaire à l'axe longitudinal A ou de révolution du stator 40 et de la turbomachine) passant sensiblement par les bords de fuite 42 des aubes fixes 44, P2 un plan transversal passant sensiblement par les bords d'attaque 46 des bras 48, P3 un plan transversal passant sensiblement par les bords d'attaque 50 des aubes fixes 44, P4 un plan transversal passant sensiblement par les bords de fuite 52 des bras 48, et P5 un plan transversal passant sensiblement par les bords d'attaque 54 des aubes à calage variable 56, 58.

Dans l'exemple représenté, P1 est en aval de P2 qui est en aval de P3. Par ailleurs, P5 est en aval de P4 et à faible distance axiale de celui-ci. Les aubes à calage variable 56, 58 sont donc situées directement en aval des bras 48.

De plus, on note H1 un plan longitudinal médian pour chaque bras 48 et H2 un plan longitudinal médian pour chaque aube fixe 44.

Les plans H1 et H2 sont ici inclinés par rapport à l'axe A et sont sensiblement parallèles entre eux. Par opposition à la technique antérieure, les bras 48 n'ont donc pas une orientation axiale mais sont au contraire « calés » (d'un angle de 20-30° par exemple) autour d'un axe sensiblement radial par rapport à l'axe A.

Chaque bras 48 présente une symétrie par rapport à son plan H1. Chaque bras 48 est tubulaire pour autoriser le passage de servitudes à travers lui, il peut par ailleurs être structural ou non. Chaque bras 48 conserve de préférence ses dimensions, telles que sa corde et son épaisseur, par rapport à la technique antérieure représentée aux figures 1 et 2.

Les aubes fixes 44 peuvent être similaires à celles de la technique antérieure.

La rangée annulaire d'aubes à calage variable 56, 58 comprend des premières aubes 56 qui sont dans le prolongement des bras 48 et des secondes aubes 58 qui sont situées entre les premières aubes 56 et en aval des aubes fixes 44 par rapport à l'écoulement du flux.

Comme cela est schématiquement représenté dans le dessin, les profils des aubes 56 sont plus accentués que ceux des aubes 58. La partie du flux d'air qui s'écoule à travers les aubes fixes 44 est davantage redressée que la partie du flux d'air s'écoulant le long des bras 48 du fait de la courbure du profil des aubes fixes 44. Pour que le flux d'air sortant du stator soit homogène sur toute sa circonférence, il faut que la partie du flux d'air s'écoulant des bords de fuite des bras 48 soit davantage redressée que celle s'écoulant des bords de fuite des aubes fixes 44. Les profils des aubes 56, 58 sont donc configurés pour que la partie du flux d'air s'écoulant des bords de fuite des bras 48 soit davantage redressée que celle s'écoulant des bords de fuite des aubes fixes 44, et que le flux d'air sortant du stator soit homogène sur toute sa circonférence. Ce flux d'air présente avantageusement un triangle de vitesses 38 sensiblement identique à celui de la technique antérieure (figure 2) de façon à ce que le flux d'air vu par la roue de rotor 28 située en aval ne soit pas impacté par la configuration du stator/carter d'entrée selon l'invention.

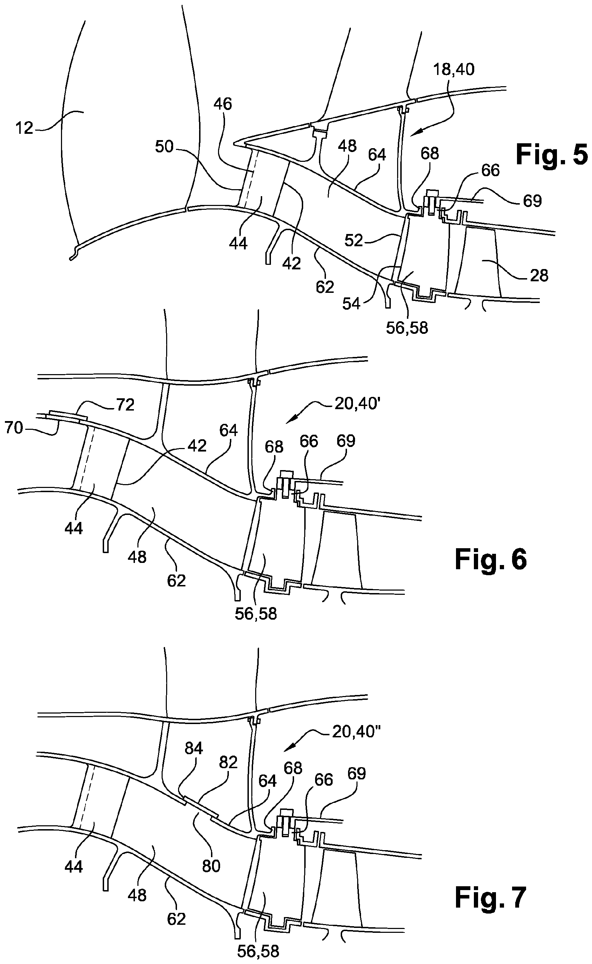

On se réfère désormais à la figure 5 qui représente un mode de réalisation plus concret d'un stator 40 selon l'invention, qui est ici un carter d'entrée 18.

Comme dans l'exemple précité, le stator 40 comprend des rangées d'aubes fixes 44, de bras 48 et d'aubes à calage variable 56, 58, ces dernières présentant deux profils distincts. Ces rangées d'aubes 44, 56, 58 et de bras 48 s'étendent entre deux parois annulaires coaxiales, respectivement radialement interne 62 et externe 64.

Chaque aube à calage variable 56, 58 comprend à son extrémité radiale externe un pivot cylindrique 66 qui est monté dans une cheminée 68 de la paroi externe 64 et qui est relié par une biellette 69 à un anneau de commande (non représenté) pour le positionnement de l'aube 56, 58 autour de l'axe défini par son pivot 66.

On se réfère désormais aux figures 6 et 7 qui représentent des variantes de réalisation de stators 40', 40" selon l'invention, qui sont ici des carters intermédiaires 20.

Comme dans l'exemple précité, chaque stator 40', 40" comprend des rangées d'aubes fixes 44, de bras 48 et d'aubes à calage variable 56, 58 présentant deux profils distincts. Ces rangées d'aubes 44, 56, 58 et de bras 48 s'étendent entre deux parois annulaires coaxiales, respectivement radialement interne 62 et externe 64. Chaque aube à calage variable 56, 58 comprend à son extrémité radiale externe un pivot cylindrique 66 qui est monté dans une cheminée 68 de la paroi externe 64 et qui est relié par une biellette 69 à un anneau de commande (non représenté) pour le positionnement de l'aube 56, 58 autour de l'axe défini par son pivot 66.

De plus, la paroi externe 64 comprend en outre des moyens de décharge d'air. Dans le cas de la figure 6, la paroi externe 64 comprend, en amont des bras 48, une rangée annulaire de fentes traversantes 70 de passage d'air de décharge et des moyens 72 d'obturation de ces fentes 70. Dans le cas de la figure 7, la paroi externe 64 comprend, entre les bras 48, au moins une ouverture traversante 80 de passage d'air de décharge et au moins une porte 82 d'obturation de cette ouverture 80, la porte 82 étant ici montée pivotante autour d'un axe d'articulation 84. Cet axe d'articulation 84 est situé à une extrémité amont de la porte 82 et est par exemple sensiblement tangent à une circonférence centrée sur l'axe longitudinal du stator 40".

De préférence, le stator 40, 40', 40" selon l'invention est monobloc, c'est-à-dire formé d'une seule pièce, à l'exception bien sûr des aubes à calage variable qui doivent rester mobiles. Le stator peut être réalisé en plusieurs étapes par exemple à partir d'un brut de fonderie qui est usiné puis mécano-soudé.

## Revendications

1. Stator (40, 40', 40") de turbomachine d'aéronef, comportant une rangée annulaire d'aubes fixes (44) et une rangée annulaire de bras (48), le stator présentant un axe de révolution (A) et les bords de fuite (42) des aubes fixes sont situés sensiblement dans un premier plan (P1) transversal audit axe de révolution et situé en aval d'un deuxième plan (P2) transversal audit axe de révolution et passant sensiblement par les bords d'attaque (46) des bras, ledit stator étant **caractérisé en ce que**
- les bords d'attaque (50) des aubes fixes (44) sont situés sensiblement dans un troisième plan (P3) transversal audit axe de révolution et situé en amont du deuxième plan (P2),
et **en ce qu'**il comporte en outre une rangée annulaire d'aubes à calage variable (56), située directement en aval de la rangée annulaire de bras (48), la rangée annulaire d'aubes à calage variable (56, 58) comprenant des premières aubes à calage variable (56) qui sont situées sensiblement dans le prolongement des bras (48), et des secondes aubes à calage variable (58) qui sont situées entre les premières aubes à calage variable, les premières aubes à calage variable ayant des profils aérodynamiques différents de ceux des secondes aubes à calage variable.

2. Stator (40, 40', 40") selon la revendication 1, **caractérisé en ce que** les plans longitudinaux médians (H1) des bras (48) sont inclinés par rapport à l'axe longitudinal (A) du stator.

3. Stator (40, 40', 40") selon la revendication 2, **caractérisé en ce que** les plans longitudinaux médians (H1, H2) des bras (48) et des aubes fixes (44) sont sensiblement parallèles.

4. Stator (40, 40', 40") selon l'une des revendications précédentes, **caractérisé en ce qu'**il comprend deux parois annulaires respectivement interne (62) et externe (64), entre lesquelles s'étendent les rangées d'aubes fixes (44) et de bras (48).

5. Stator (40, 40', 40") selon la revendication 4, en dépendance de la revendication 5 ou 6, **caractérisé en ce que** chaque aube à calage variable (56) comprend à son extrémité radiale externe un pivot cylindrique (66) qui est monté dans une cheminée (68) de la paroi externe (64).

6. Stator (40, 40', 40") selon la revendication 4 ou 5, **caractérisé en ce que** la paroi externe (64) comprend :
- en amont des bras, une rangée annulaire de fentes traversantes (70) de passage d'air de décharge et des moyens (72) d'obturation de ces fentes, ou
- entre des bras, au moins une ouverture traversante (80) de passage d'air de décharge et au moins une porte (82) d'obturation de cette ouverture.

7. Stator (40, 40', 40") selon l'une des revendications précédentes, **caractérisé en ce que** les premières aubes à calage variable (56) ont des profils aérodynamiques ou courbures plus accentués que ceux des secondes aubes à calage variable (58).

8. Turbomachine d'aéronef, telle qu'un turboréacteur ou un turbopropulseur, **caractérisée en ce qu'**elle comprend au moins un stator (40, 40', 40") selon l'une des revendications précédentes.

## Patentansprüche

1. Stator (40, 40', 40") einer Turbomaschine eines Luftfahrzeugs, der eine ringförmige Reihe von feststehenden Schaufeln (44) und eine ringförmige Reihe von Armen (48) beinhaltet, wobei der Stator eine Drehachse (A) aufweist und die Hinterkanten (42) der feststehenden Schaufeln im Wesentlichen in einer ersten Ebene (P1) gelegen sind, die quer zur Drehachse ist und einer zweiten Ebene (P2) nachgelagert gelegen ist, die quer zur Drehachse ist und im Wesentlichen durch die Angriffskanten (46) der Arme läuft, wobei der Stator **dadurch gekennzeichnet ist, dass**
- die Angriffskanten (50) der feststehenden Schaufeln (44) im Wesentlichen in einer dritten Ebene (P3) gelegen sind, die quer zur Drehachse ist und der zweiten Ebene (P2) vorgelagert gelegen ist,
und dadurch, dass er weiter eine ringförmige Reihe von Schaufeln mit variabler Feststellposition (56) beinhaltet, die der ringförmigen Reihe von Armen (48) direkt nachgelagert gelegen ist, wobei die ringförmige Reihe von Schaufeln mit variabler Feststellposition (56, 58) erste Schaufeln mit variabler Feststellung (56), die im Wesentlichen in der Verlängerung der Arme (48) gelegen sind, und zweite Schaufeln mit variabler Feststellposition (58), die zwischen den ersten Schaufeln mit variabler Feststellposition gelegen sind, umfasst, wobei die ersten Schaufeln mit variabler Feststellposition andere aerodynamische Profile aufweisen als jene der zweiten Schaufeln mit variabler Feststellposition.

2. Stator (40, 40', 40") nach Anspruch 1, **dadurch gekennzeichnet, dass** die Mittellängsebenen (H1) der Arme (48) in Bezug auf die Längsachse (A) des Stators geneigt sind.

3. Stator (40, 40', 40") nach Anspruch 2, **dadurch gekennzeichnet, dass** die Mittellängsebenen (H1, H2) der Arme (48) und die feststehenden Schaufeln (44) im Wesentlichen parallel sind.

4. Stator (40, 40', 40") nach einem der vorstehenden Ansprüche, **dadurch gekennzeichnet, dass** er jeweils zwei innere (62) und äußere (64) ringförmige Wände umfasst, zwischen denen sich die Reihen von feststehenden Schaufeln (44) und von Armen (48) erstrecken.

5. Stator (40, 40', 40") nach Anspruch 4, in Abhängigkeit von Anspruch 5 oder 6, **dadurch gekennzeichnet, dass** jede Schaufel mit variabler Feststellposition (56) an ihrem radialen äußeren Ende einen zylindrischen Bolzen (66) umfasst, der in einem Schacht (68) der äußeren Wand (64) montiert ist.

6. Stator (40, 40', 40") nach Anspruch 4 oder 5, **dadurch gekennzeichnet, dass** die äußere Wand (64) umfasst:
- den Armen vorgelagert, eine ringförmige Reihe von durchgehenden Schlitzen (70) zum Durchlauf von Abluft und Mittel (72) zum Verschließen dieser Schlitze, oder
- zwischen den Armen, mindestens eine durchgehende Öffnung (80) zum Durchlauf von Abluft und mindestens eine Tür (82) zum Verschließen dieser Öffnung.

7. Stator (40, 40', 40") nach einem der vorstehenden Ansprüche, **dadurch gekennzeichnet, dass** die ersten Schaufeln mit variabler Feststellung (56) aerodynamische Profile oder Krümmungen aufweisen, die stärker ausgeprägt sind als jene der zweiten Schaufeln mit variabler Feststellung (58).

8. Turbomaschine eines Luftfahrzeugs wie eines Turbostrahltriebwerks oder eines Turboprops, **dadurch gekennzeichnet, dass** sie mindestens einen Stator (40, 40', 40") nach einem der vorstehenden Ansprüche umfasst.

## Claims

1. Stator (40, 40', 40") of an aircraft turbine engine, comprising an annular row of fixed vanes (44) and an annular row of arms (48), the stator having an axis (A) of revolution and the trailing edges (42) of the fixed vanes are positioned substantially in a first plane (P1) that is transverse to said axis of revolution and is positioned downstream of a second plane (P2) that is transverse to said axis of revolution and passes substantially through the leading edges (46) of the arms, sais stator being **characterised in that**:
- the leading edges (50) of the fixed vanes (44) are positioned substantially in a third plane (P3) that is transverse to said axis of revolution and is positioned upstream of the second plane (P2),
and **in that** it further comprises an annular row of variable-pitch vanes (56) that is positioned directly downstream of the annular row of arms (48), the annular row of variable-pitch vanes (56, 58) comprising first variable-pitch vanes (56) that are positioned substantially in the extension of the arms (48), and second variable-pitch vanes (58) that are positioned between the first variable-pitch vanes, the first variable-pitch vanes having different aerodynamic profiles to those of the second variable-pitch vanes.

2. Stator (40, 40', 40") according to claim 1, **characterised in that** the central longitudinal planes (H1) of the arms (48) are inclined relative to the longitudinal axis (A) of the stator.

3. Stator (40, 40', 40") according to claim 2, **characterised in that** the central longitudinal planes (H1, H2) of the arms (48) and of the fixed vanes (44) are substantially parallel.

4. Stator (40, 40', 40") according to any of the preceding claims, **characterised in that** it comprises two annular walls that are inner (62) and outer (64), respectively, between which the rows of fixed vanes (44) and arms (48) extend.

5. Stator (40, 40', 40") according to claim 4, when dependent on either claim 5 or claim 6, **characterised in that** each variable-pitch vane (56) comprises, at its outer radial end, a cylindrical pivot (66) that is mounted in a duct (68) on the outer wall (64).

6. Stator (40, 40', 40") according to either claim 4 or claim 5, **characterised in that** the outer wall (64) comprises:
- upstream of the arms, an annular row of discharge air through-slots (70) and means (72) for closing said slots, or
- between the arms, at least one discharge air through-opening (80) and at least one door (82) for closing said opening.

7. Stator (40, 40', 40") according to any of the preceding claims, **characterised in that** the first variable-pitch vanes (56) have aerodynamic profiles or curvatures that are more accentuated than those of the second variable-pitch vanes (58).

8. Aircraft turbine engine, such as a turbojet engine or turboprop engine, **characterised in that** it comprises at least one stator (40, 40', 40") according to any of the preceding claims.
